# EUROPEAN PATENT SPECIFICATION

(11) **EP 1 205 943 B1**
(45) Date of publication and mention of the grant of the patent: **10.09.2003**
(21) Application number: 00945962.9
(22) Date of filing: 19.07.2000
(51) Int. Cl.: H01B 1/12, C08F 38/02

(54) **MATERIAL USEFUL AS ELECTRIC CONDUCTOR AND COMPRISING POLYACETYLENE OR SUBSTITUTED POLYACETYLENES INCORPORATED IN A MESOPOROUS SUPPORT, PRODUCTION PROCESS, AND CONDUCTORS MADE OF SAID MATERIAL**
ALS ELEKTRISCHER LEITER VERWENDBARES MATERIAL, BESTEHEND AUS POLYACETYLEN ODER SUBSTITUIERTEN POLYACETYLENEN, DIE IN MESOPORÖSEN SUBSTRATEN EINGELAGERT SIND, UND ELEKTRISCHE LEITER DIE AUS DIESEM MATERIAL GEFERTIG SIND
MATERIAU SERVANT DE CONDUCTEUR ELECTRIQUE COMPRENANT UN POLYACETYLENE OU DES POLYACETYLENES SUBSTITUE(S) INCORPORE(S) DANS UN SUPPORT MESOPOREUX ET PROCEDE D'OBTENTION DU MATERIAU ET DE CONDUCTEURS COMPRENANT LE MATERIAU

(30) Priority: 21.07.1999 ES 9901708
(43) Date of publication of application: 15.05.2002
(73) Proprietor: UNIVERSIDAD POLITECNICA DE VALENCIA, 46022 Valencia (ES)
(72) Inventor: ALVARO RODRIGUEZ, Mercedes, 46022 Valencia (ES); GARCIA GOMEZ, Hermenegildo, 46022 Valencia (ES); GILBERT, Andrew, 46022 Valencia (ES); CARDIN, David, 46022 Valencia (ES)
(74) Representative: Elzaburu Marquez, Alberto
(86) International application number: ES0000260
(87) International publication number: WO01005840

(56) References cited:
- EP-A- 0 026 235
- WO-A-83/02617

## Description

### TECHNICAL FIELD OF THE INVENTION

The present invention refers to electrical conducting organic polymers, particularly to conducting materials composed by an inorganic host and specifically to conducting materials in which the inorganic host incorporates an electrically conducting polymer. ,

### STATE OF THE ART PRIOR TO THE INVENTION

There are a series of organic polymers which under certain oxidation states exhibit a high electrical conductivity and which, for this reason, are called conducting organic polymers (Novák, Müller et al. "Electrochemically Active Polymers for Rechargeable Batteries" (1997), Chem. Rev. 97:207-281). Although in such polymers the monomeric unit which repeats itself throughout the polymer can be very varied, structurally they have in common the presence of a linear substructure of conjugated C=C double bonds. Among these conducting organic polymers, the most simple one, and for which a highest electrical conductivity has been described, includes polyacetylene and substituted polyacetylenes which present the structural formula: 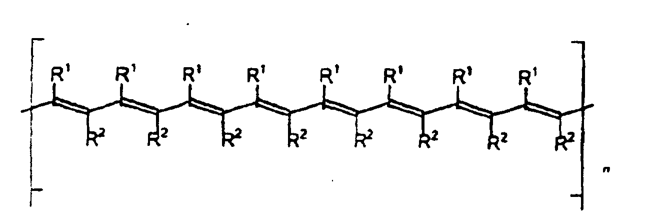 and which is obtained from the polymerisation of alkine monomers with the structural formula:

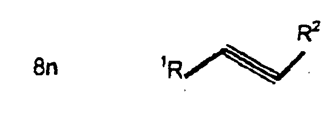

Where R¹ and R² are H or a substituent such as alkyl groups of less than four carbons (Me, Eth, Pr, i-Pr, Bu), phenyl groups with or without substituents at the para position (with groups such as Me, Eth, MeO, HO, etc), cyano group and methoxycarbonyl.

The properties of the basic polyacetylene chain can be controlled by the presence of electron-donor or electron-acceptor substituents. To this respect, the synthesis of substituted polyacetylenes from suitable polyacetylenes by using wolframium and molybdenum transition metals has been described (Masuda and Higashimura: "Polyacetylenes with Substituents: Their Synthesis and Properties" (1987), Adv. Polym. Sci., 81: 121-165).

The existence of extended conjugation throughout the conducting polymer is not enough to provide polyacetylene with a high electrical conductivity since in neutral state these materials behave as insulators. It is therefore necessary to proceed to the introduction of electrical charges (= doping) into the polymer, be it positive charges (= p type doping) or negative (= n type doping). Conductivity manifests itself after a specific charge threshold.

Although from a practical point of view, conducting organic polymers could be applied as substitutes of metallic conductors in printed circuits and as electrodes, their application in the industrial practice has been essentially limited due to two reasons: i) the difficulties in the synthesis of polyacetylene and its derivatives, and ii) the great instability of polyacetylenes, particularly after being doped, which gives rise to their oxidative degradation in the presence of oxygen, which results in the destruction of the polyacetylene chain by reaction with molecular oxygen. This results in that polyacetylenes and their derivatives must be manipulated in inert gas atmosphere or under a vacuum, which considerably complicates the manufacture and handling of conducting elements which employ these materials.

Materials which combine conducting organic polymers with mineral hosts have been described (Cox and Stucky: "Polymerization of Methylacetylene in Hydrogen Zeolites" (1991), J. Phys. Chem., 95:710-720; Pereira, Kokotailo et al.: "Acetylene Polymerization in a H-ZSM-5 Zeolite" (1991), J. Mater. Chem., 3(8):867-872; Lewis, Millar et al.: "Trans-Polyacetylene on Sodium and Caesium Mordenites: A Resonance Raman Spectroscopic Study" (1993), Chem. Mat., 5:1509-1517; Millar, Lewis et al: "Raman-Spectroscopic Study of the Formation of Polyacetylene within Zeolite Channels" (1993), J. Mater. Chem., 3:867-872) obtained by the preparation of polyacetylene and polypropyne in the channels of microporous zeolites of medium pore size, that is, ZSM-5 Zeolite with elliptical channels of 0.54 x 0.56 nm, and of greater pore size, i.e. mordenite with 0.74 nm mean diameter channels.

The direct polymerization of pyrrole and thiophene to respectively give polypyrrole and polythiophene in the interior of the MCM-41 mesoporous aluminosilicate has also been described (Wu and Bein: "Conducting Carbon Wires in Ordered Nanometer-Sized Channels" (1994), Science, 266:705-709: Wu and Hein: "Conducting Polymer Wires in Mesopore Hosts" (1994), Stud. Surf. Sci. Catal. 84:2269-2276; Wu and Bein "Polyaniline Wires in Oxidant-Containing Mesoporous Channel Hosts" (1994), Chem. Mater., 6(8): 1109-1112; McCann, Millar et al.: "Formation of Polypyrrole and Polythiophene within Cu²⁺ Mordenite and H⁺ Mordenite Hosts Studied by EPR and UV-VIS Spectroscopy" (1995), J. Chem. Soc. Faraday Trans., 91(23): 4321-4328).

The previously mentioned materials do not permit to obtain sufficiently high contents of conducting organic polymers in the inorganic hosts so as to find utility in industrial applications. Therefore, the inner volume available for polymerization in zeolites and mordenites is insufficient to manage to house amounts of conducting polymer greater than 10%, which in addition is achieved without obtaining polymers with sufficient purity. Additionally, the reduced size of the pores of the microporous zeolite hosts does not allow the hosts to house organic polymers substituted with voluminous groups, such as for example phenyl (or other substituted phenyls of formula R-C₆-H₄ where R can be an alkyl group of less than four carbons, as well as a methoxy or hydroxy group).

On the other hand, polypyrrole and polythiophene polymers are structurally different from polyacetylene and its derivatives.

### OBJECTS OF THE INVENTION

The present invention has the object of providing materials useful as electrical conductors which comprise a host incorporating a conducting organic polymer, polyacetylene or polyacetylene derivatives, which protects the polymer from oxidation by oxygen in the environment, which are easy to manufacture and which are susceptible of containing the conducting polymer in a proportion sufficient to be able to take advantage if their conductive properties, and which permit the doping of the conducting polymer in a simple and effective manner.

The invention also has the object of providing a process for the preparation of these materials.

A further object of the invention is that of providing electrical conductors which incorporate the aforementioned materials.

Other objects and advantages of the invention will become apparent in the description of the invention which will be exposed hereunder.

### DESCRIPTION OF THE INVENTION

The present invention refers to a material useful as an electrical conductor which comprises a conducting polymer incorporated in channels within a porous host, in which the polymer is polyacetylene or a polyacetylene derivative, in which the polymer is formed by polymerization of vapours of the acetylene monomer, previously adsorbed in channels free of host structure directing agent, with the host encapsulating the polymer in such a way as to protect the polymer from oxidation by ambient oxygen, and where the host is a modified mesoporous aluminosilicate which presents a mean pore diameter between 2 nm and 100 nm.

In a preferred embodiment of the invention, the host is an aluminosilicate with a mean pore diameter of 3.2 nm. In another preferred embodiment, the mean pore diameter of the host is 6.2 nm.

Specially suitable hosts are those constituted by the MCM-41 type hexagonal-phase aluminosilicates or the MCM-48 type cubic-phase ones.

In a preferred embodiment of the invention the aluminosilicate is modified by ion-exchange with transition metal ions, or by impregnation by the introduction of transition metal ions. Such metallic ions can be Fe³⁺, Cu²⁺ and, especially Ni²⁺ ions. Fe(NO₃)₃, Cu(AcO)₂ and Ni(AcO)₂ are particularly suitable sources of these ions.

According to what has been stated above, the conducting organic polymers are polyacetylene and polyacetylenes substituted with, for example, methyl, phenyl, para-substituted phenyls, cyano and methoxycarbonyl. Said polymers can be present in the neutral state and become activated, for the corresponding use, by adding positive charges consisting in a p-doping or negative charges consisting in an n-doping.

The invention also refers to a process for preparing the aforementioned materials, which consists in incorporating a conducting polymer into channels within a porous host, in which the polymer is polyacetylene or a polyacetylene derivative, which process is described below.

In a first stage, a host is selected constituted by a modified mesoporous aluminosilicate, which presents a mean pore diameter between 2 nm and 100 nm. According to what was stated above in relation to the description of the invention, aluminosilicates of the MCM-41 and MCM-48 types can be employed. These aluminosilicates can be obtained by means of conventional methods basically consisting in a hydrothermal crystallisation of a mixture of silicate and aluminate gels in the presence of concentrated alkyltrimethylammonium type surfactant solutions (Beck, Vartuli, et al.: "A New Family of Mesoporous Molecular Sieves Prepared with Liquid Crystal Templates" (1992). J. Am. Chem. Soc., 114: 10834-10843; Behrens: "Mesoporous Inorganic Solids" (1993), Adv. Mater. 5: 127-132; 3ehrens and Haak: "Ordered Molecular Arrays as Templates: A New Approach to Synthesis of Mesoporous Materials" (1993), Angew. Che, Int. Ed. Engl., 32(5): 696-699). In these methods the length of the chain of the alkyl group of alkyltrimethylammonium, concentration of the surfactant and the crystallisation time exert an influence upon the pore size of the final aluminosilicate. In a typical embodiment of these processes, a mixture of ketyltrimethylammonium bromide and tetramethylammonium hydroxide (approximately 15% by weight) is used, which is maintained, without stirring, in an autoclave with a steel reactor coated with TEFLON at approximately 130°C, at autogenous pressure for 24 hours. Higher concentrations of the surfactant agent or longer crystallisation times usually lead to expanded mesoporous materials with a greater mean pore diameter. In order to obtain aluminosilicates useful in relation to the present invention, the parameters of the method for preparing mesoporous aluminosilicates are chosen so that a suitable pore size is obtained, for example, between 2.5 and 6.2 nm, with Si/Al ratios of between ∞ and 13 for example.

To carry out the process of the invention, the structure directing agent usually present in the channels of the aluminosilicate must have been eliminated form the aluminosilicate. The elimination of the structure directing agent can be carried out by means of exhaustive extraction with a suitable solvent. Thus, when the structure directing agent, as is the case with aluminosilicates of the MCM-41 and MCM-48 types, is constituted by alkyltrimethylammonium cations, a suitable solvent is methanol. During the extraction, the degree of progress of the extraction is verified by combustion analysis (C and N). Alternately, the elimination of the structure directing agent present in the aluminosilicate can be carried out by means of controlled calcination in an oven using gentle temperature gradients up to 550°C, first under a nitrogen current and, in the final phase, under an air current. Both in the case of elimination by solvent extraction as in that employing controlled calcination, the operation is considered finished when the C content, measured by combustion analysis, is below 0.05% by weight compared with the initial value. Typically, aluminosilicates of the MCM-41 and MCM-48 types have an initial organic matter content of approximately 54% by weight.

It must be taken into account that, as is well known, in a large number of mesoporous aluminosilicates, the elimination of the structure directing agent brings about the progressive collapse of the mesopores which can result in a complete collapse of the structure within a matter of months. Therefore, in mesoporous aluminosilicates of this type, it is convenient to use them as hosts in the manufacture of the materials of the present application before approximately 15 days have elapsed after the elimination of the structure directing agent.

After being stripped of the structure directing agent, in a first phase of the process, the aluminosilicate is subjected to dehydration. This dehydration can be carried out by heating the aluminosilicate to approximately 300°C at a vacuum pressure of approximately 10⁻² torr for 24 hours.

In a second stage, a gaseous current of an acetylene containing monomer is prepared, such as for example acetylene or a substituted acetylene, conveniently treated to ensure it is free of impurities, moisture or other residual gases.

In a third stage, a treatment is carried out consisting in the impregnation of the aluminosilicate with the monomer vapours, so that the aluminosilicate channels become filled with the monomers. Once these have become adsorbed in the aluminosilicate channels, the monomers polymerise. Conveniently, in order to obtain more uniform materials, the aluminosilicate is magnetically stirred during impregnation with the vapours of the polymer. Although polymerization takes place to a certain extent, at room temperature, it is convenient to carry out this third stage at a temperature between 25 and 400°C in order to achieve maximal incorporation and polymerization of the polymers. Typically, this treatment is carried out in the vapour phase at ambient conditions or at a high vapour pressure, in a reactor, such as for instance a Schlenk type reactor, which contains the aluminosilicate. After finishing the treatment the reactor is emptied under a vacuum. This treatment can be repeated until the necessary degree of impregnation has been achieved, or until maximum impregnation has been achieved. In practice, maximum impregnation has been achieved by repeating the third stage for a total of three times. At the end of this third stage, the material comprised by the aluminosilicate and the polymer is allowed to cool down to room temperature.

The reaction time has an influence upon the achieved polymerization degree. Thus, as the reaction proceeds, a change can be observed in the mesoporous aluminosilicate from a white initial colouring towards a grey or to a black colour. Taking into consideration that polyacetylene is essentially black, the darkening degree of the impregnated host during the reaction is indicative of the polymerisation degree of acetylene into polyacetylene.

In the case of commercial non-substituted acetylene, in order to eliminate acetone, moisture and other impurities that might be present, it is convenient to bubble the gas through a scrubber containing concentrated sulphuric acid, and subsequently through NaOH.

According to what has been indicated above, the aluminosilicate is preferably modified by ion exchange with transition metal ions in an aqueous solution or by impregnation by the introduction of transition metal ions.

The modification by ion-exchange is preferably carried out when the aluminosilicate contains Al in high amounts and it basically consists in a treatment in which the aluminosilicate is contacted with a concentrated aqueous solution which contains some of the transition metals specified above. In a preferred embodiment of the invention, this solution is of Ni(AcO)₂ and typically at a concentration between 0.4-0.8 M, employing, for example, a solid/liquid ratio of approximately 1:10. The contact time between the aluminosilicate and an aqueous solution of the type described above should be conveniently below 30 minutes in order to reduce to a minimum the negative influence of the solution upon the aluminosilicate structure. When higher exchange levels are desired, it is possible, to again put the aluminosilicate into contact with a more concentrated solution, typically 1M. This ion exchange treatment to modify the aluminosilicate can also be analogously applied when a transition metal ion different from Ni is chosen.

On the other hand, when dealing with an aluminosilicate in which the Si/Al ratio is ∞, its modification is preferably carried out by an impregnation treatment in which the aluminosilicate and the compound source (for example Fe(NO₃)₃, Cu(AcO)₂ or, preferably Ni(AcO)₂) which contains the transition metal ion, in a ratio between 100:5 and 100:0.1, are mechanically mixed, progressively heating the resulting mixture, preferably up to 300°C.

It has been possible to demonstrate that the formation of the polymers in the aluminosilicate mesoporous host is especially effective when the aluminosilicate exhibits a high exchange degree.

The final structure of the aluminosilicate exchanged with transition metal ions is characterised by a specific x-ray pattern indicative of its crystalline nature and by a certain isothermal gas adsorption capacity indicative of the mesoporous nature and of its surface area. It can usually be observed that the modification of aluminosilicates modified by ion exchange with transition metal ions, gives rise to a reduction in the crystallinity values of up to over 40% and in surface area of up to over 10% with respect to the values corresponding to non-modified aluminosilicates. By way of example, the MCM-41 material with a pore size of 3.2 nm undergoes, after two successive exchanges with Ni(AcO)₂, a 50% reduction in the number of 2θ 2.4° peak counts and a reduction in surface area (according to the BET algorithm) from an initial value of 850 m²/g to 700 m²/g. Even so, they still exhibit a high mesoporosity level and are ideal as hosts in the materials of the present invention.

The rigid matrix of the aluminosilicate employed according to the invention contains active centres that act as catalytic centres of the polymerization process. After polymerization, the aluminosilicate channels are packed with the polymer chains and its inert inorganic walls act as protective sheaths. In this way, the tendency of the polymers towards decomposing is drastically reduced. This implies that these materials can be stored and processed in environments in which oxygen is present without any loss in their properties.

The doping of the conductive materials of the present invention, that is, the oxidation or reduction of the polymers encapsulated within the mesoporous aluminosilicates, consists in charging the encapsulated polymer positively by means of a p-type doping or negatively by means of n-type doping. Doping can be carried out by chemical or by electrochemical means.

For the electrochemical doping of the materials of the present invention, modified electrodes are prepared by conventional methods, finally applying a positive electrical potential (for p-doping) or a negative electrical potential (for n-doping).

To obtain a chemically doped material of the p-type, the starting material consists of mesoporous aluminosilicates exchanged with Cu²⁺ since, after polymerization, Cu²⁺ becomes reduced to Cu⁺, which in turn implies the oxidation of the polymer. Sn⁴⁺ or other metallic ions that can undergo reduction after the formation of the polymer can also be used.

On the other hand, in order to obtain a doped material of the n-type, the starting materials are mesoporous aluminosilicates which contain Ni²⁺ and which are subjected to a prior reduction under hydrogen current at approximately 500°C. By means of this reduction, the transformation of Ni²⁺ into Ni(0) is achieved, being it possible to visually appreciate this transformation by the progressive darkening of the aluminosilicate which at the end becomes completely black. The aluminosilicate containing Ni(0) atoms must be stored and handled in an inert atmosphere in the absolute absence of moisture or oxygen. The polymerization of the monomers in Ni(0) based mesoporous aluminosilicate hosts is carried out following the process described above.

The invention also refers to electrical conductors which comprise the materials described above. These conductors can be, for example, electrodes for batteries, especially lithium batteries, conducting surfaces for displays, conducting surfaces for luminous devices, and the like.

Typically, an electrode according to the invention is prepared by coating a conductive, inert, vitrified and polished host, with a paste composed at least by a mixture of the conducting material, powdered graphite and paraffin with an agglutinating agent, for example in a ratio by weight between 80:15:5 and 10:85:5, and allowing the electrode so obtained to dry. In general, lower ratios of the polymer-containing aluminosilicate and greater ones of graphite, such as for example 50:40:10 remarkably decrease the resistivity of the paste. A preferred preparation of the invention employs a ratio between polymer-containing aluminosilicate: graphite:paraffin of 35:60:5.

The conducting surfaces according to the invention are typically obtained from the deposition, on an inert conducting host, of a layer of a suspension of the polyacetylene-containing mesoporous host according to the invention in an organic solvent, such as for example acetone, adding, after allowing to air-dry, an aqueous solution, for example at 10%, of polyvinyl alcohol.

Conductors so prepared, be them in paste or layer form, are subjected to a positive electrical potential (for example +2,0 V, for p-doping) or to a negative electrical potential (for example - 1,7 V, for n-doping), to respectively achieve the polymer oxidation or reduction.

The mesoporous aluminosilicates which are used in the preparation of the conductive materials of the present application, have the advantage of having an internal volume and an internal surface far greater to that of the zeolites and, therefore, permit the effective encapsulation of amounts greater than 30% of polyacetylene and polyacetylene derivatives, sufficient for a great part of industrial applications.

### DETAILED DESCRIPTION OF THE INVENTION

The following examples will illustrate the invention in greater detail.

### Example 1:

The alkyltrimethylammonium ion content present as structure directing agent, was determined by solids combustion analysis of ten samples of mesoporous aluminosilicates of the MCM-41 type, with pore sizes of 3.2 nm and 6.2 nm respectively, and mean particle sizes of 1 µm. A content of approximately 55% by weight was detected.

The samples were subjected to exhaustive conventional extraction, using methanol as a solvent to eliminate the structure directing agent, checking the progress of the elimination by C combustion analysis.

Subsequently the Ni²⁺ ions were introduced by successively contacting the solids with two 0.6 and 1.0 M aqueous solutions of Ni(AcO)₂ for 20 minute periods. The final content of Ni¹⁻ was around 3% by weight for the 3.2 nm aluminosilicate and 0.5 for the 6.2 nm aluminosilicate.

Subsequently the samples were subjected to dehydration by heating at 300°C at a pressure of 10⁻² tcrr for 24 hours.

### Example 2:

Five samples of MCM-41 with a mean pore size of 3.2 nm and another five samples of MCM-41 with a mean pore size of 6.2 nm were placed into independent vials of 5 ml of capacity which are hermetically attached to a Schlenk type reactor, provided with a drum which permits the simultaneous treatment of five samples at controlled temperature, into which commercial acetylene gas was introduced, which had previously been purified by bubbling through a container with concentrated sulphuric acid and subsequently through a second container with NaOH, at a pressure of 1 atm and for a period of five minutes, and were subjected to different temperatures. Finally the reactor was effluxed to vacuum and the samples were allowed to cool at room temperature. This cycle was repeated three times.

It was possible to observe that temperature exerted a crucial influence upon the polymerization of acetylene in the reactor. Therefore it was possible to quantitatively establish the amount of polymer formed by means of combustion analysis of the solid to determine the total C content of the obtained materials. The results of the analyses are shown in table I.

**Table 1:**

| Effect of the reaction temperature upon the carbon content for the reaction of acetylene in the presence of mesoporous aluminosilicates. | | |
|---|---|---|
| | C Content (% by weight) | |
| Temperature (°C) | MCM-41 (3.2 nm) | MCM-48 (6.2 nm) |
| Ambient | 5.88 | 3.91 |
| 90 | 6.47 | 5.94 |
| 150 | 26.39 | 2.06 |
| 225 | 32.52 | 27.51 |
| 300 | 51.65 | 29.62 |

According to what is shown by the values indicated in table I, the maximum content achieved for polyacetylene if 51%. This value is remarkable and allows applications such as the use of the material as electrodes in lithium batteries which demand a high content in the electroactive component. In fact, when the C content in the initial samples (54% by weight of alkyltrimethylammonium) is compared with the value for 3.2 nm MCM-41 at a temperature of 300°C, it is possible to observe that most part of the mesoporous aluminosilicate channels, which were initially occupied by the structure directing agent, have been occupied by polyacetylene.

According to the current knowledge of mesoporous materials, the maximum packing density of an organic host within the channels, corresponds to that of the structure directing agent. Accordingly, it is possible to conclude that by means of the process of the present invention, an almost complete filling of the internal ' spaces of the aluminosilicate was achieved, with an efficacy and packaging degree similar to that of the structure directing agent.

### Example 3:

The samples prepared according to example 2 were analysed with regard to the presence and purity of the polyacetylene synthesised within the interior of the mesoporous aluminosilicate. It was possible to establish that
i) the FT-Raman spectra of the samples coincide with those described in the chemical literature (Lewis, Millar et al.: "Trans-Polyacetylene on Sodium and Cesium Mordenites: A Resonance Raman Spectroscopic Study" (1993), Chem. Mat., 5:1509-1517; Millar, Lewis et al: "Raman-Spectroscopic Study of the Formation of Polyacetylene within Zeolite Channels" (1993), J. Mater. Chem., 3:867-872) for polyacetylenes, being the most characteristic absorptions in the bands of 1490 and 1110 cm⁻¹;
ii) the UV/vis spectra obtained by diffuse reflectance coincide with those described (Cox and Stucky: "Polymerization of Methylacetylene in Hydrogen Zeolites" (1991), J. Phys. Chem., 95:710-720; Pereira, Kokotailo et al.: "Acetylene Polymerization in a H-ZSM-5 Zeolite" (1991), J. Mater. Chem., 3(8):867-872) for the polyacetylenes and are characterised by absorption throughout the whole range of wavelengths, in which the extinction coefficient decreases progressively with the increase in wavelength;
iii) in solids ¹³C NMR spectroscopy signals appear which correspond to olefinic carbons between 150 and 100 ppm, together with the signals characteristic of each constituent if any;
iv) in X-ray photoelectronic spectroscopy (XPS) it is possible to confirm the presence, in the external surface, of carbon aluminosilicate particles with sp² hybridisation, which is indicative of the presence of polyacetylene;
v) in mass spectroscopy using the fast atom bombardment method (FAB-MS) it is established that the maximum weight of the polymer situated in the outermost parts of the aluminosilicate particle is greater than 1200 dalton;
vi) when the polymer content of the samples was established by thermogravimetry coupled with differential scanning calorimetry it was established that the encapsulated polyacetylenes are thermally stable up to a temperature of 300°C.

### Example 4:

In order to obtain an electrcde comprising 6.2 nm MCM-41 obtained according to example 2, for a lithium battery, the following process is carried out:

80g of aluminosilicate are mixed in a mortar with 15g of graphite powder and 5g of paraffin are added as agglutinant (commercialised by Aldrich under the name Nujol oil for spectroscopy) to obtain a paste which is deposited on a conveniently polished inert conducting host, and allowed to dry.

The so formed electrode is subjected to +2.0V for a p-doping, or alternatively, to -1.7V for an n-doping, to achieve its complete oxidation or reduction, respectively. In the electrochemical process Pt is employed as ancillary electrode, and a saturated solution of calomel as reference electrode. Although the doping can be carried out in an aqueous medium, it can also be carried out in organic solvents such as acetonitrile and dimethylformamide. Among the supporting electrolytes that can be used in organic solvents it is possible to mention tetraethylammonium perchlorate, n-butylammonium hexafluorophosphate, whereas lithium or sodium perchlorate can be used in water.

### Example 5:

In order to obtain a conducting surface comprising 6.2 nm MCM-41 obtained according to example 2, a suspension of 1g of MCM-41 is prepared in 25 ml of acetone and is deposited over an inert conductive host. After air-drying, few drops of an aqueous solution of 10% polyvinyl alcohol are added.

The so formed electrode is subjected to +2.0V for a p-doping, or alternatively, to -1.7V for an n-doping, to achieve its complete oxidation or reduction, respectively. The electrochemical process is carried out using the same means and reagents as those described for example 3.

## Claims

1. A material useful as an electrical conductor comprising a conducting polymer incorporated in channels within a porous host, wherein the polymer is polyacetylene or a polyacetylene derivative,
**characterised in that**
the polymer is formed by polymerization of vapours of the acetylene monomer, previously adsorbed in channels of the mesoporous material, free of host structure directing agent;
the host encapsulates the polymer in such a way that the polymer is protected against oxidation by ambient oxygen; and
the host is a modified mesoporous aluminosilicate which presents a mean pore diameter between 2 nm and 100 nm.

2. A host according to claim 1, **characterised in that** the host is an aluminosilicate with a mean pore diameter of 3.2 nm.

3. A host according to claim 1, **characterised in that** the host is an aluminosilicate with a mean pore diameter of 6.2 nm.

4. A material according to claims 1, 2 or 3, **characterised in that** it comprises an aluminosilicate host which incorporates a polymer comprised by polyacetylene substituted with phenyl groups.

5. A material according to any of claims 1 to 4, **characterised in that** the host is an hexagonal-phase aluminosilicate of the MCM-41 type.

6. A material according to any of claims 1 to 4, **characterised in that** the host is a cubic-phase aluminosilicate of the MCM-48 type.

7. A material according to any of claims 1 to 6, **characterised in that** the aluminosilicate has been modified by ion-exchange with transition metal ions.

8. A material according to any of claims 1 to 6, **characterised in that** the aluminosilicate has been modified by impregnation by means of the introduction of transition metal ions.

9. A material according to claims 7 or 8, **characterised in that** the metal ions are Ni²⁺ ions.

10. A material according to claim 9, **characterised in that** the transition metal ions originate from Ni(AcO)₂.

11. A material according to claims 7 or 8, **characterised in that** the metal ions are Fe³⁺ ions.

12. A material according to claim 11, **characterised in that** the Fe³⁺ ions originate from Fe(NO₃)₃.

13. A material according to claims 7 or 8, **characterised in that** the metal ions are Cu²⁺ ions.

14. A material according to claim 13, **characterised in** thac the transition metal ions originate from Cu(AcO)₂.

15. A material according to claims 1 to 4, **characterised in that** the polymer exhibits a positive charge consisting in a p-doping.

16. A material according to claims 1 to 4, **characterised in that** the polymer exhibits a negative charge consisting in an n-doping.

17. A process to prepare an electrically conductive material which comprises
incorporating a conductive polymer into channels within a porous host, in which the polymer is polyacetylene or a polyacetylene derivative,
**characterised in that** it comprises
dehydrating a modified aluminosilicate not containing a structure directing agent in its channels;
preparing a vapour of an acetylene monomer;
performing at least one impregnation and polymerization phase which comprises incorporating the vapour into the aluminosilicate channels, and subjecting the alumincsilicate with the monomers to polymerization by means of a thermal treatment at a temperature between 25 and 400°C; the host being a modified mesoporous aluminosilicate which presents a mean pore diameter between 2 nm and 100 nm.

18. A process according to claim 17, **characterised in that** the host is selected from a MCM-41 type hexagonal-phase aluminosilicate and a MCM-48 type cubic-phase aluminosilicate.

19. A process according to any of claims 16 to 18, **characterised in that** the aluminosilicate is modified by ion-exchange with transition metal ions in an aqueous solution prior to the polymerization phase.

20. A process according to any of claims 16 to 18, **characterised in that** the aluminosilicate is modified by impregnation by means of the introduction of transition metal ions.

21. A process according to claim 19 or 20, **characterised in that** the metal ions are selected from Ni²⁺, Fe³⁺ and Cu²⁺ ions.

22. A process according to claim 21, **characterised in that** the Ni²⁺ ions originate from Ni(AcO)₂.

23. A process according to claim 21, **characterised in that** the Fe²⁺ ions originate from Fe(NO₃)₃.

24. A process according to claim 21, **characterised in that** the Cu²⁺ ions originate from Cu(AcO)₂.

25. A process according to claim 17, **characterised in that** the encapsulated polymer is positively charged by means of a p-type doping.

26. A process according to claim 17, **characterised in that** the encapsulated polymer is negatively charged by means of a n-type doping.

27. A process according to claims 25 or 26, **characterised in that** the doping is carried out electrochemically.

28. A process according to claims 25 or 26, **characterised in that** the doping is carried out chemically.

29. A process according to claim 17, **characterised in that** the impregnation and polymerization phase is repeated three times.

30. A process according to claim 17, **characterised in that** the polymer is polyacetylene substituted with methyl, phenyl, tara-substituted phenyls, cyano, methoxycarbcnyl groups.

31. An electrical conductor **characterised in that** it comprises a material according to any of claims 1-16.

32. An electrical conductor **characterised in that** it comprises a material prepared according to the process according to any of claims 17-30.

33. A conductor according to claims 31 or 32, **characterised in that** it is an electrode used in batteries, which comprises said material.

34. A conductor according to claims 31 or 32, **characterised in that** it is a conductive surface for displays, which comprises said material.

35. A conductor according to claims 31 or 32, **characterised in that** it is a conductive surface for luminous devices, which comprises said material.

36. A conductor according to claim 33, **characterised in that** it is an electrode in lithium batteries, which comprises said material.

37. A conductor according to claims 33 or 36, **characterised in that** the electrode comprises
an inert, vitrified and polished electrode
a coating of the inert electrode at least composed by a mixture of said material, powdered graphite and paraffin as an agglutinant.

38. A conductor according to claim 37, **characterised in that** the coating contains said material, graphite and paraffin in a ratio by weight of 80:15:5.

39. A conductor according to claims 34 or 35, **characterised in that** the conducting surface is a layer obtained by the deposition on a host of a suspension of said material on an organic solvent with an aqueous solution of polyvinyl alcohol.

40. A conductor according to claim 39, **characterised in that** the organic solvent is acetone.

41. A conductor according to claim 39, **characterised in that** the aqueous solution of polyvinyl alcohol is a 10% solution.

## Patentansprüche

1. Material, das als elektrischer Leiter brauchbar ist, umfassend ein leitfähiges Polymer, das In Kanäle Innerhalb eines porösen Wirts eingefügt ist, wobei das Polymer Polyacetylen oder ein Polyacetylen-Derivat ist, **dadurch gekennzeichnet, dass** das Polymer durch Polymerisation von Dämpfen des Acetylen-Monomers gebildet wird, das vorher in Kanälen des mesoporösen Materials adsorbiert wurde, die frei von Wirtsstruktur-bestimmendem Mittel sind;
wobei der Wirt das Polymer in derartiger Weise einkapselt, dass das Polymer gegen Oxidation durch umgebenden Sauerstoff geschützt ist, und
der Wirt ein modifiziertes mesoporöses Aluminiumsillcat ist, das einen mittleren Porendurchmesser zwischen 2 nm und 100 nm aufweist.

2. Wirt gemäß Anspruch 1, **dadurch gekennzeichnet, dass** der Wirt ein Aluminiumsilicat mit einem mittleren Porendurchmesser von 3,2 nm ist.

3. Wart gemäß Anspruch 1, **dadurch gekennzeichnet, dass** der Wirt ein Aluminiumsillcat mit einem mittleren Porendurchmesser von 6,2 nm ist.

4. Material gemäß den Ansprüchen 1, 2 oder 3, **dadurch gekennzeichnet, dass** es einen Aluminiumsilicat-Wirt umfasst, in den ein Polymer eingefügt ist, das mit Phenylgruppen substituiertes Polyacetylen umfasst.

5. Material gemäß irgendeinem der Ansprüche 1 bis 4, **dadurch gekennzeichnet, dass** der Wirt ein Aluminiumsilicat mit hexagonaler Phase vom Typ MCM-41 ist.

6. Material gemäß irgendeinem der Ansprüche 1 bis 4, **dadurch gekennzeichnet, dass** der Wirt ein Aluminiumsilicat mit kubischer Phase vom Typ MCM-48 ist.

7. Material gemäß irgendeinem der Ansprüche 1 bis 6, **dadurch gekennzeichnet, dass** das Aluminiumsilicat durch Ionenaustausch mit Übergangsmetallionen modifiziert wurde.

8. Material gemäß irgendeinem der Ansprüche 1 bis 6, **dadurch gekennzeichnet, dass** das Aluminiumsilicat durch Imprägnieren mittels Einführung von Übergangsmetallionen modifiziert wurde.

9. Material gemäß den Ansprüchen 7 oder 8, **dadurch gekennzeichnet, dass** die Metallionen Ni²⁺-Ionen sind.

10. Material gemäß Anspruch 9, **dadurch gekennzeichnet, dass** die Übergangsmetallionen aus Ni(AcO)₂ stammen.

11. Material gemäß den Ansprüchen 7 oder 8, **dadurch gekennzeichnet, dass** die Metallionen Fe³⁺-Ionen sind.

12. Material gemäß Anspruch 11, **dadurch gekennzeichnet, dass** die Fe³⁺-Ionen von Fe(NO₃)₃ stammen.

13. Material gemäß den Ansprüchen 7 oder 8, **dadurch gekennzeichnet, dass** die Metallionen Cu²⁺-Ionen sind.

14. Material gemäß Anspruch 13, **dadurch gekennzeichnet, dass** die Übergangsmetallionen aus Cu(AcO)₂ stammen.

15. Material gemäß den Ansprüchen 1 bis 4, **dadurch gekennzeichnet, dass** das Polymer eine positive Ladung aufweist, die aus einem Dotieren vom p-Typ besteht.

16. Material gemäß den Ansprüchen 1 bis 4, **dadurch gekennzeichnet, dass** das Polymer eine negative Ladung aufweist, die aus einem Dotieren vom n-Typ besteht.

17. Verfahren zur Herstellung eines elektrisch leitfähigen Materials, umfassend das Einfügen eines leitfähigen Polymers in Kanäle innerhalb eines porösen Wirts, in welchem das Polymer Polyacetylen oder ein Polyacetylen-Derivat ist, **dadurch gekennzeichnet, dass** es folgendes umfasst:
die Dehydratation eines modifizierten Aluminiumsiticats, das kein Struktur-bestimmendes Mittel in seinen Kanälen enthält;
die Herstellung eines Dampfes des Acetylen-Monomers;
die Durchführung wenigstens einer Imprägnierungs- und Polymerisationsphase, umfassend das Einbringen des Dampfes in die Aluminiumsilicat-Kanäle und die Durchführung einer Polymerisation des Aluminiumsilicats mit den Monomeren durch eine Wärmebehandlung bei einer Temperatur zwischen 25 und 400 °C;
wobei der Wirt ein modifiziertes mesoporöses Aluminiumsilicat ist, das einen mittleren Poren Durchmesser zwischen 2 nm und 100 nm hat.

18. Verfahren gemäß Anspruch 17, **dadurch gekennzeichnet, dass** der Wirt aus Aluminiumsilicat mit hexagonaler Phase vom Typ MCM-41 und einem Aluminiumsilicat mit kubischer Phase vom Typ MCM-48 ausgewählt ist.

19. Verfahren gemäß irgendeinem der Ansprüche 16 bis 18, **dadurch gekennzeichnet, dass** das Aluminiumsilicat vor der Polymerisationsphase durch Ionenaustausch mit Übergangsmetallionen in einer wässrigen Lösung modifiziert wird.

20. Verfahren gemäß irgendeinem der Ansprüche 16 bis 18, **dadurch gekennzeichnet, dass** das Aluminiumsilicat durch Imprägnieren mittels Einführen von Übergangsmetallionen modifiziert wird.

21. Verfahren gemäß den Ansprüchen 19 oder 20, **dadurch gekennzeichnet, dass** die Metallionen aus Ni²⁺-, Fe³⁺- und Cu²⁺-Ionen ausgewählt werden.

22. Verfahren gemäß Anspruch 21, **dadurch gekennzeichnet, dass** die Ni²⁺-Ionen aus Ni (OAc)₂ stammen.

23. Verfahren gemäß Anspruch 21, **dadurch gekennzeichnet, dass** die Fe³⁺-Ionen von Fe(NO₃)₃ stammen.

24. Verfahren gemäß Anspruch 21, **dadurch gekennzeichnet, dass** die Cu²⁺-Ionen aus Cu(AcO)₂ stammen.

25. Verfahren gemäß Anspruch 17, **dadurch gekennzeichnet, dass** das eingekapselte Polymer durch ein Dotieren vom p-Typ positiv geladen ist.

26. Verfahren gemäß Anspruch 17, **dadurch gekennzeichnet, dass** das eingekapselte Polymer durch ein Dotieren vom n-Typ negativ geladen ist.

27. Verfahren gemäß den Ansprüchen 25 oder 26, **dadurch gekennzeichnet, dass** das Dotieren elektrochemisch durchgeführt wird.

28. Verfahren gemäß den Ansprüchen 25 oder 26, **dadurch gekennzeichnet, dass** das Dotieren chemisch durchgeführt wird.

29. Verfahren gemäß Anspruch 17, **dadurch gekennzeichnet, dass** die Imprägnierungs- und die Polymerisationsphase dreimal wiederholt werden.

30. Verfahren gemäß Anspruch 17, **dadurch gekennzeichnet, dass** das Polymer Poplyacetylen ist, das mit Methyl-, Phenyl-, p-substituierten Phenyl-, Cyano- und Methoxycarbonylgruppen substituiert ist.

31. Elektrischer Leiter, **dadurch gekennzeichnet, dass** er ein Material gemäß irgendeinem der Ansprüche 1 bis 16 umfasst.

32. Elektrischer Leiter, **dadurch gekennzeichnet, dass** er ein Material umfasst, welches gemäß dem Verfahren gemäß irgendeinem der Ansprüche 17 bis 30 hergestellt wird.

33. Leiter gemäß den Ansprüchen 31 oder 32, **dadurch gekennzeichnet, dass** er eine in Batterien verwendete Elektrode ist, die das Material umfasst.

34. Leiter gemäß den Ansprüchen 31 oder 32, **dadurch gekennzeichnet, dass** er eine leitfähige Oberfläche für Displays ist, die das Material umfasst.

35. Leiter gemäß den Ansprüchen 31 oder 32, **dadurch gekennzeichnet, dass** er eine leitfähige Oberfläche für leuchtende Vorrichtungen ist, die das Material umfasst.

36. Leiter gemäß Anspruch 33, **dadurch gekennzeichnet, dass** er eine Elektrode in Lithiumbatterien ist, die das Material umfasst.

37. Leiter gemäß den Ansprüchen 33 oder 36, **dadurch gekennzeichnet, dass** die Elektrode folgendes umfasst:
eine inerte, gesinterte und polierte Elektrode,
eine Beschichtung der inerten Elektrode, die wenigstens aus einer Mischung des Materials, pulverförmigem Graphit und Paraffin als Bindemittel besteht.

38. Leiter gemäß Anspruch 37, **dadurch gekennzeichnet, dass** die Beschichtung das Material, Graphit und Paraffin in einem Gewichtsverhältnis von 80:15:8 enthält.

39. Leiter gemäß den Ansprüchen 34 oder 35, **dadurch gekennzeichnet, dass** die leitfähige Oberfläche eine Schicht ist, die durch Abscheidung einer Suspension des Materials in einem organischen Lösungsmittel mit einer wässrigen Polyvinylalkohol-Lösung auf einem Wirt erhalten wird.

40. Leiter gemäß Anspruch 39, **dadurch gekennzeichnet, dass** das organische Lösungsmittel Aceton ist.

41. Leiter gemäß Anspruch 39, **dadurch gekennzeichnet, dass** die wässrige Polyvinylalkohol-Lösung eine 10%ige Lösung ist.

## Revendications

1. Matériau utilisable comme conducteur électrique, comportant un polymère conducteur incorporé dans les canaux d'une matrice poreuse, ce polymère étant un polyacétylène ou un dérivé de polyacétylène,
**caractérisé en ce que**
le polymère est formé par polymérisation de vapeurs d'un monomère acétylénique, préalablement adsorbé dans les canaux du matériau mésoporeux, en l'absence d'agent de structuration de la matrice,
la matrice emprisonne le polymère de telle manière que le polymère est protégé contre l'oxydation par l'oxygène de l'air ambiant,
et la matrice est un aluminosilicate mésoporeux modifié dans lequel le diamètre moyen des pores vaut de 2 à 100 nm.

2. Matériau conforme à la revendication 1, **caractérisé en ce que** la matrice est un aluminosilicaie dans lequel le diamètre moyen des pores vaut 3,2 nm.

3. Matériau conforme à la revendication 1, **caractérisé en ce que** la matrice est un aluminosilicate dans lequel le diamètre moyen des pores vaut 6,2 nm.

4. Matériau conforme à la revendication 1, 2 ou 3, **caractérisé en ce qu'**il comporte une matrice d'aluminosilicate renfermant un polymère qui est un polyacétylène portant des groupes phényle en tant que substituants.

5. Matériau conforme à l'une des revendications 1 à 4, **caractérisé en ce que** la matrice est un aluminosilicate à phase hexagonale, de type MCM-41.

6. Matétiau conforme à l'une des revendications 1 à 4, **caractérisé en ce que** la matrice est un aluminosilicate à phase cubique, de type MCM-48.

7. Matériau conforme à l'une des revendications 1 à 6, **caractérisé en ce que** l'aluminosilicate a été modifié par échange d'ions avec des ions d'un métal de transition.

8. Matériau conforme à l'une des revendications 1 à 6, **caractérisé en ce que** l'aluminosilicate a été modifié par introduction, par imprégnation, d'ions d'un métal de transition.

9. Matériau conforme à la revendication 7 ou 8, **caractérisé en ce que** les ions de métal sont des ions Ni²⁺.

10. Matériau conforme à la revendication 9, **caractérisé en ce que** les ions de métal de transition proviennent de Ni(AcO)₂.

11. Matériau conforme à la revendication 7 ou 8, **caractérisé en ce que** les ions de métal sont des ions Fe³⁺.

12. Matériau conforme à la revendication 11, **caractérisé en ce que** les ions Fe³⁺ proviennent de Fe(NO₃)₃.

13. Matériau conforme à la revendication 7 ou 8, **caractérisé en ce que** les ions de métal sont des ions Cu²⁺.

14. Matériau conforme à la revendication 13, **caractérisé en ce que** les ions de métal de transition proviennent de Cu(AcO)₂.

15. Matériau conforme à l'une des revendications 1 à 4, **caractérisé en ce que** le polymère présente une charge positive résultant d'un dopage par impureté du type P.

16. Matériau conforme à l'une des revendications 1 à 4. **caractérisé en ce que** le polymère présente une charge négative résultant d'un dopage par impureté du type N.

17. Procédé de fabrication d'un matériau conducteur électrique, comportant le fait d'incorporer dans les canaux d'une matrice poreuse un polymère conducteur qui est un polyacétylène ou un dérivé de polyacétylène, **caractérisé en ce qu'**il comporte :
le fait de déshydrater un aluminosilicate modifié qui ne contient pas d'agent de structuration dans ses canaux,
le fait de préparer de la vapeur d'un monomère acétylénique,
le fait d'effectuer au moins un cycle d'imprégnation et de polymérisation, qui consiste à faire entrer la vapeur dans les canaux de l'aluminosilicate et à soumettre l'aluminosilicate et le monomère à une polymérisation par traitement thermique à une température de 25 à 400 °C,
la matrice étant un aluminosilicate mésoporeux modifié dans lequel le diamètre moyen des pores vaut de 2 à 100 nm.

18. Procédé conforme à la revendication 17, **caractérisé en ce que** la matrice est choisie parmi un aluminosilicate à phase hexagonale, de type MCM-41, et un aluminosilicate à phase cubique, de type MCM-48.

19. Procédé conforme à la revendication 17 ou 18, **caractérisé en ce que** l'aluminosilicate a été modifié par échange d'ions avec des ions d'un métal de transition, en solution aqueuse, avant l'étape de polymérisation

20. Procédé conforme à la revendication 17 ou 18, **caractérisé en ce que** l'aluminosilicate a été modifié par introduction, par imprégnation, d'ions d'un métal de transition.

21. Procédé conforme à la revendication 19 ou 20, **caractérisé en ce que** les ions de métal sont choisis parmi les ions Ni²⁺, Fe³⁺ et Cu²⁺.

22. Procédé conforme à la revendication 21, **caractérisé en ce que** les ions Ni²⁺ proviennent de Ni(AcO)₂.

23. Procédé conforme à la revendication 21, **caractérisé en ce que** les ions Fe³⁺ proviennent de Fe(NO₃)₃.

24. Procédé conforme à la revendication 21, **caractérisé en ce que** les ions Cu²⁺ proviennent de Cu(AcO)₂.

25. Procédé conforme à la revendication 17, **caractérisé en ce que** le polymère enfermé présente une charge positive résultant d'un dopage par impureté du type P.

26. Procédé conforme à la revendication 17, **caractérisé en ce que** le polymère enfermé présente une charge négative résultant d'un dopage par impureté du type N.

27. Procédé conforme à la revendication 25 ou 26, **caractérisé en ce que** le dopage est effectué par voie électrochimique.

28. Procédé conforme à la revendication 25 ou 26, **caractérisé en ce que** le dopage est effectué par voie chimique.

29. Procédé conforme à la revendication 17, **caractérisé en ce que** le cycle d'imprégnation et de polymérisation est répété à trois reprises.

30. Procédé conforme à la revendication 17, **caractérisé en ce que** le polymère est un polyacétylène qui porte, en tant que substituants, des groupes méthyle, phényle, phényle para-substitués, cyano ou méthoxycarbonyle.

31. Conducteur électrique, **caractérisé en ce qu'**il comporte un matériau conforme à l'une des revendications 1 à 16.

32. Conducteur électrique, **caractérisé en ce qu'**il comporte un matériau fabriqué selon un procédé conforme à l'une des revendications 17 à 30.

33. Conducteur conforme à la revendication 31 ou 32, **caractérisé en ce qu'**il s'agit d'une électrode employée dans des piles ou des accumulateurs, qui contient dudit matériau.

34. Conducteur conforme à la revendication 31 ou 32, **caractérisé en ce qu'**il s'agit d'une surface conductrice pour afficheurs, qui contient dudit matériau.

35. Conducteur conforme à la revendication 31 ou 32, **caractérisé en ce qu'**il s'agit d'une surface conductrice pour dispositifs lumineux, qui contient dudit matériau.

36. Conducteur conforme à la revendication 33, **caractérisé en ce qu'**il s'agit d'une électrode employée dans des piles au lithium, qui contient dudit matériau.

37. Conducteur conforme à la revendication 33 ou 36, **caractérisé en ce que** l'électrode comporte
une électrode inerte, vitrifiée et polie,
et un revêtement d'électrode inerte, au moins composé d'un mélange dudit matériau, de graphite en poudre, et de paraffine servant de liant.

38. Conducteur conforme à la revendication 37, **caractérisé en ce que** le revêtement contient dudit matériau, du graphite en poudre et de la paraffine en les proportions pondérales de 80/15/5.

39. Conducteur conforme à la revendication 34 ou 35, **caractérisé en ce que** la surface conductrice est une couche obtenue par dépôt, sur une matrice, d'une suspension dudit matériau dans un solvant organique, avec une solution aqueuse de poly(alcool vinylique).

40. Conducteur conforme à la revendication 39, **caractérisé en ce que** le solvant organique est de l'acétone.

41. Conducteur conforme à la revendication 39, **caractérisé en ce que** la solution aqueuse de poly(alcool vinylique) est une solution à 10 %.
